# EUROPÄISCHE PATENTSCHRIFT

(11) **EP 2 195 195 B1**
(45) Veröffentlichungstag und Bekanntmachung des Hinweises auf die Patenterteilung: **21.03.2012**
(21) Anmeldenummer: 08874440.4
(22) Anmeldetag: 23.12.2008
(51) Int. Cl.: B60R 1/06

(54) **RÜCKSPIEGELANORDNUNG FÜR FAHRZEUGE**
REAR VIEW MIRROR ARRANGEMENT FOR VEHICLES
SYSTEME DE RETROVISEUR POUR VEHICULE

(30) Priorität: 24.10.2008 DE 102008053177
(43) Veröffentlichungstag der Anmeldung: 16.06.2010
(73) Patentinhaber: MEKRA Lang GmbH & Co. KG, 90765 Fürth (DE)
(72) Erfinder: LANG, Werner, 91465 Ergersheim (DE); PFANZ, Jürgen, 91583 Schillingsfürst (DE)
(74) Vertreter: Winter, Brandl, Fürniss, Hübner, Röss, Kaiser, Polte - Partnerschaft
(86) Internationale Anmeldenummer: PCT/EP2008/068252
(87) Internationale Veröffentlichungsnummer: WO 2010/045989

(56) Entgegenhaltungen:
- DE-A1- 4 343 691
- DE-A1- 10 341 818

## Beschreibung

Die Erfindung betrifft eine Rückspiegelanordnung nach dem Oberbegriff des Anspruch 1.

Zur Verstellung von Außenspiegeln bei Fahrzeugen sind prinzipiell zwei Konzepte bekannt: zum einen kann eine Glasträgerplatte mit einer darauf angeordneten Spiegelscheibe relativ zu einem diese umgebenden Gehäuse durch eine motorische Stelleinheit gedreht werden. Das Gehäuse bleibt dabei relativ zu einem Träger des Fahrzeugs, an dem die gesamte Rückspiegelanordnung befestigt ist, ortsfest. Solche Rückspiegelanordnungen sind beispielsweise in der EP 0 449 056 B1 beschrieben.

Zum anderen kann die Glasträgerplatte zusammen mit dem Gehäuse gegenüber dem Träger des Fahrzeugs gedreht werden. Eine solche Rückspiegelanordnung ist beispielsweise aus der EP 0 306 728 B1 bekannt. Bei dieser ist wie bei den meisten Rückspiegelanordnungen dieses Konzepts eine Grundplatte an dem Träger des Fahrzeugs befestigt. Zwischen der Grundplatte und dem Gehäuse, an dem die Spiegelscheibe direkt befestigt ist, ist eine Stelleinheit angeordnet. Diese dreht das Gehäuse mitsamt der daran befestigten Spiegelscheibe relativ zur Grundplatte zum damit zum Träger des Fahrzeugs.

Nachteilig bei einer solchen Anordnung ist die relativ große Bauhöhe des Gehäuses, die zur Aufnahme der Grundplatte und der Stelleinheit erforderlich ist. Sie vergrößert nicht nur Gewicht und Windwiderstand, sondern schränkt auch das Sichtfeld ein.

Hierzu schlägt die EP 0 090 909 A2 vor, die Stelleinheit direkt, d.h. ohne zwischen geordnete Grundplatte, an dem Träger des Fahrzeugs zu befestigten. Dies löst oben genannte Probleme.

Auch bei dieser Rückspiegelanordnung ist jedoch das Gehäuse an der Einstelleinheit und die Spiegelscheibe am Gehäuse befestigt. Dies reduziert die Steifigkeit der Verbindung zwischen der schweren Spiegelscheibe und der Halterung. Durch die geringe Steifigkeit sinkt die Eigenfrequenz des Systems und führt zu einer für den Fahrer unangenehmen Sichtverschlechterung.

Ein weiteres Problem ist die große Bauhöhe, die diese Lösung erfordert. Durch den großen Abstand von der Spiegelscheibe zum Träger wird die Lage des Trägers ungünstig in Fahrzeugrichtung nach vom verlagert, um die gewünschte Lage für die Spiegelscheibe zu erreichen. Der große Abstand erfordert wiederum eine höhere Steifigkeit der Konstruktion, da das Hauptgewicht durch die Spiegelscheibe hervorgerufen wird.

Des Weiteren erfordert diese Art der Konstruktion eine aufwendige Montage, da zur Montage des Spiegelkopfes viele Einzelteile zu montieren sind, die zudem von verschiedenen Seiten angebracht werden müssen, was ein mehrfaches Wenden erfordert.

Aus der DE 103 41 818 A oder auch der DE 4343691 A1 ist eine Rückspiegelanordnung in Form eines so genannten Kopfverstellers bekannt Die Rückspiegelanordnung umfasst eine Einstelleinheit mit einer Basis und einer gegenüber dieser Basis verschwenkbaren Plattform. An der Plattform ist eine Glasträgerplatte befestigt, auf deren Vorderseite eine Spiegelscheibe angeordnet ist. Ein Gehäuse umschließt von der Rückseite her die Anordnung und ist unmittelbar an der Plattform befestigt. Durch diese Lösung werden einige der zuvor aufgeführten Probleme beseitigt.

Da jedoch das Gehäuse an der Plattform zu befestigen ist, verbleibt zum einen ein höherer Montageaufwand, und zum anderen ragt die Einstelleinheit weit aus der Gehäuseform heraus. Hierdurch kann die Bauhöhe nicht auf das gewünschte Maß reduziert werden. Zwar ist für das eigentliche Gehäuse außerhalb der Einstelleinheit eine flache Form möglich, doch ist diese strömungstechnisch ungünstig.

Ausgehend von der DE 103 41 818 A oder der DE 4 343 691 A1 ist es Aufgabe der vorliegenden Erfindung, eine alternative Rückspiegelanordnung zur Verfügung zu stellen, die eine geringe Bauhöhe bei minimalem Montageaufwand realisiert.

Die Lösung dieser Aufgabe erfolgt durch die Merkmale des Anspruchs 1.

Dadurch, dass das Gehäuse an der Glasträgerplatte befestigt ist, muss es keinerlei Stütz- oder Trägerfunktion übernehmen. Damit kann das Gehäuse leicht und einfach als dünne Schale ausgeführt werden. Durch die Öffnung auf der Rückseite des Gehäuses erstreckt sich die Basis frei ohne unmittelbaren Kontakt zu dem Gehäuse der Einstelleinheit nach außen. Damit ist es möglich, das Gehäuse aerodynamisch zu gestalten.

Dadurch, dass gemäß Anspruch 2 keine Befestigung des Gehäuses an der Plattform notwendig ist, müssen hinsichtlich der Gestaltung und Aerodynamik keine Kompromisse hierfür eingegangen werden.

Ein weiterer Vorteil der Erfindung besteht darin, dass nur wenige Einzelkomponenten - Glaseinheit, Einstelleinheit und Gehäuse - nötig sind, wodurch zum einen die Montage und auch die Lagerhaltung vereinfacht wird. Diese drei Komponenten lassen sich ohne Verschraubungen zusammenbauen.

Zudem wird durch den einfachen Aufbau auch eine kompakte Baugröße erreicht, so dass der Spiegelkopf recht klein gehalten werden kann. Dadurch wird die Verdeckung der Sicht nach vorne durch die Rückspiegelanordnung minimiert.

Die Spiegeltrageplatte wird üblicherweise durch Formschluss- und/oder Reibschluss-Verbindung an der Plattform befestigt. Damit sich die Spiegeltrageplatte während des Betriebs nicht von der Plattform löst, wird die Verbindung zwischen Spiegeltrageplatte und Plattform gesichert. Durch die bevorzugte Ausführungsform nach Anspruch 3 umfasst das Gehäuse ein Sicherungsmittel, das beim Befestigen des Gehäuses an der Spiegeltrageplatte in die Verbindung zwischen Plattform und Spiegeltrageplatte eingreift und diese gegen unabsichtliches Lösen sichert.

Gemäß der bevorzugten Ausführungsform nach Anspruch 4, 5 und 6 erfolgt dies dadurch, dass die Verschiebung der Spiegeltrageplatte gegenüber der Plattform durch die quer hierzu erfolgende Montage des Gehäuses blockiert wird.

Durch die bevorzugte Ausführungsform nach Anspruch 7 wird eine einfach Art der Befestigung des Gehäuses an der Spiegeltrageplatte bereitgestellt.

Durch die vorteilhafte Ausgestaltung der Erfindung nach Anspruch 10 lässt sich die Rückspiegelanordnung an flächige Träger montieren, wobei durch den Winkeladapter die unterschiedlichen Winkelstellungen, wie sie für die jeweiligen Blickwinkel bei Fahrzeugen für Rechts- und Linkslenker gefordert werden, realisiert werden können. Somit kann immer der gleiche Träger verwendet werden.

Durch die vorteilhafte Ausgestaltung der Erfindung nach Anspruch 11 lässt sich in das Gehäuseinnere eingedrungenes Wasser wieder aus dem Gehäuse abführen.

Die übrigen Unteransprüche beziehen sich auf weitere bevorzugte Ausgestaltungen der Erfindung.

Durch die Gestaltung der Öffnung im Gehäuse in Kreisform sowie der Außenkontur der Verstelleinheit in einer Kugelform sowie der entsprechenden Anordnung der Gehäuseöffnung relativ zum Drehpunkt des Spiegelkopfes zum Träger kann nach Anspruch 12 bei kleinem Spalt zwischen Gehäuse und Verstelleinheit eine strömungsgünstige Gestaltung erreicht werden.

Weitere Einzelheiten, Merkmale und Vorteile der vorliegenden Erfindung ergeben sich aus den nachfolgend beschriebenen Ausführungsbeispielen.

Es zeigt:
- Fig. 1: eine Explosionsdarstellung einer ersten beispielhaften Ausführungsform der Erfindung schräg von hinten betrachtet;
- Fig. 2: eine schematische **Schnitt**darstellung der Klemmschiebeverbindung zwischen Spiegeltrageplatte und Plattform in gelöstem Zustand;
- Fig. 3: eine schematische **Schnitt**darstellung entlang der **Linie IV-IV in** **Fig. 1** der Klemmschiebeverbindung zwischen Spiegeltrageplatte und Plattform in verbundenem Zustand mit blockierenden Zapfen;
- Fig. 4: eine Schnittansicht der Klippverbindung zwischen Spiegeltrageplatte und Gehäuse;
- Fig. 5: eine beispielhafte Ausführungsform einer elektrischen Einstelleinheit; und
- Fig. 6: eine Explosionsdarstellung einer zweiten beispielhaften Ausführungsform der Erfindung schräg von hinten betrachtet.

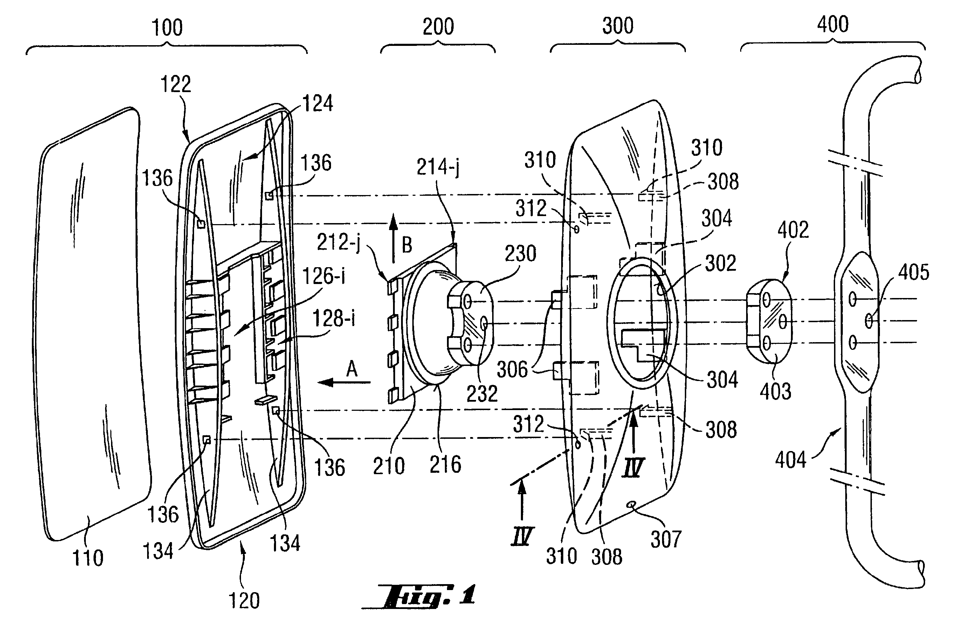

Figur 1 zeigt eine beispielhafte Ausführungsform der Rückspiegelanordnung gemäß der vorliegenden Erfindung in Explosionsdarstellung von schräg hinten. Die Rückspiegelanordnung umfasst (von links nach rechts in Fig. 1) eine Glaseinheit 100 eine elektrische Einstelleinheit 200, ein Gehäuse 300 in Form einer schalenförmigen Abdeckung und eine Befestigungseinheit 400.

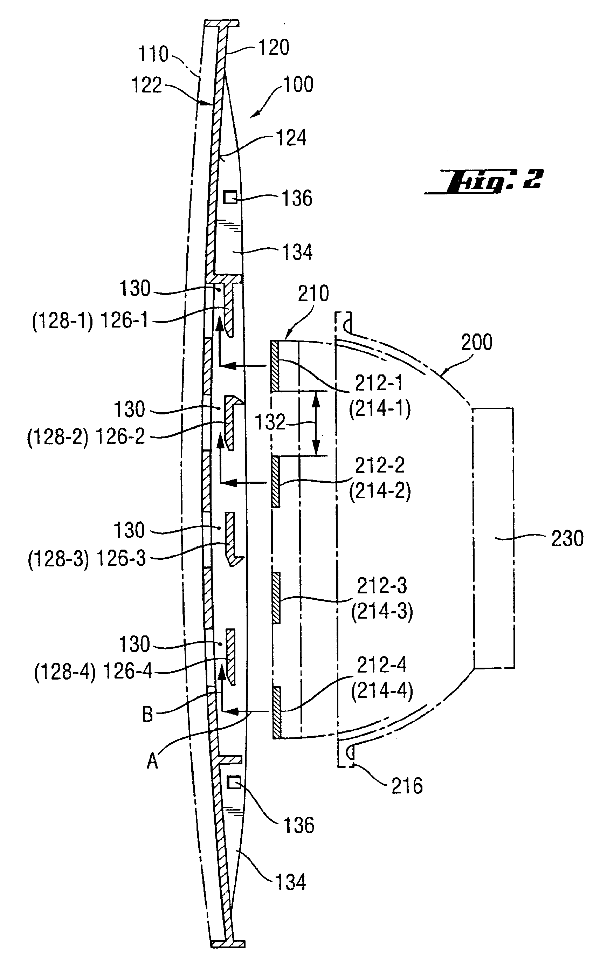

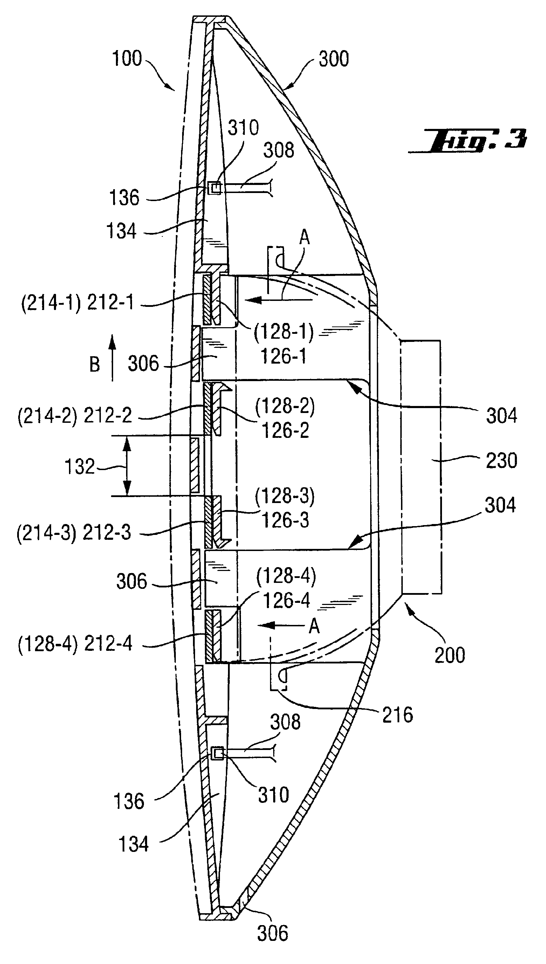

Die Glaseinheit 100 umfasst eine Spiegelscheibe 110 und eine Spiegeltrageplatte 120 mit einer Vorderseite 122 und einer Rückseite 124. Auf der Vorderseite 122 ist die Spiegelscheibe 110 befestigt. Die Glaseinheit 100 besitzt eine längliche, annähernd rechteckige Form und weist gerundete Ecken auf. Auf der Rückseite 124 der Spiegeltrageplatte 120 sind einstückig mit dieser zwei Reihen von Klemmgegenlagern 126-i und 128-i ausgebildet (vgl. Fign. 2 und 3), deren Funktion weiter unten beschrieben ist, wobei in der Ausführungsform i=1-4 gilt. Die Klemmgegenlager 126-i, 128-i erstrecken sich derart aus der Rückseite 124 heraus und parallel zu dieser, dass zwischen der Rückseite 124 und der Unterseite der Klemmgegenlager 126-i, 128-i Spalte 130 vorbestimmter Länge verbleiben. Zwischen zwei unmittelbar benachbarten Klemmgegenlagern, z. B. 126-**2** und 126-**3** in Fig. 3 ist ein Abstand 132 vorgesehen. Die zwei Reihen von Klemmlagern 126-i und 128-i der Spiegeltrageplatte 120 setzen sich beidseits (nach oben und unten in Fig. 1) als Stege 134 fort. Wie es z. B. in Fig. 1 gezeigt ist, sind in jedem der Stege 134 zwei Öffnungen 136 ausgebildet.

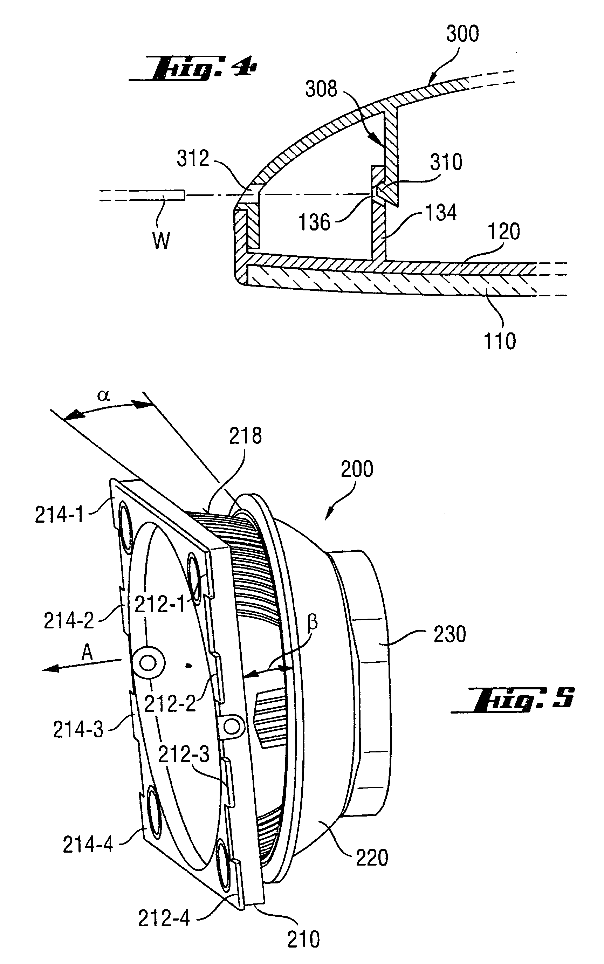

Die Einstelleinheit 200 (vgl. Fign. 1, 2 und 5) weist auf einer der Glaseinheit 100 zugewandten Seite eine rechteckförmige Plattform 210 und auf einer gegenüberliegenden Seite eine Basis 230 auf. Die Plattform 210 ist gegenüber der Basis 230 um zwei zueinander und zu einer Montagerichtung A in Fign. 1 und 2 senkrechten Achsen um einen Winkel α bzw. einen Winkel β schwenkbar, wie es in Fig. 5 angedeutet ist, wobei sich zwei ineinander liegende Kalotten, eine plattformseitige 218 und eine basisseitige 220 relativ zueinander verlagern. Ferner umfasst die Plattform 210 eine Mehrzahl von Haltezapfen 212-j, 214-j, die an gegenüberliegenden Seitenkanten der Plattform 210, entlang der jeweiligen Seitenkanten verteilt angeordnet sind, wobei in der Ausführungsform i=1-4 gilt. Insbesondere gilt iₘₐₓ = jₘₐₓ, d. h. jedem Haltezapfen ist ein Klemmgegenlager zugeordnet. Die Haltezapfen 212-j sind in Aufsicht auf die Plattform 210 entlang der rechten Seitenkante, und die Haltezapfen 214-j entlang der linken Seitenkante angeordnet. Ferner weist die Basis **230** auf der der Befestigungseinheit 400 zugewandten Oberfläche drei Gewindebohrungen 232 auf.

Das Gehäuse 300 besitzt eine Außenkontur, die derjenigen der Spiegeltrageplatte 120 entspricht, und weist eine zentrale Öffnung 302 und sich im Wesentlichen senkrecht zur ihrer Oberfläche erstreckende Sicherungsstege 304 (vgl. Fig. 3) auf. Die Sicherungsstege 304 weisen in Fig. 1 zur Rückseite 124 der Spiegeltrageplatte 120 und haben Fortsätze 306, die sich in dieser Richtung erstrecken. Ferner ragen von der der Spiegeltrageplatte 120 zugewandten Oberfläche des Gehäuses 300 Rasthaken 308 hervor, an deren Ende eine Nase 310 ausgebildet ist.

Die Befestigungseinheit 400 umfasst einen keilförmigen Winkeladapter 402 und eine am Fahrzeug (nicht gezeigt) angebrachte Haltevorrichtung 404 in Form eines Trägers. Der Winkeladapter 402 und die Haltervorrichtung 404 besitzen drei Durchgangslöcher 403 bzw. 405, deren Positionen mit denen der Gewindelöcher 232 der Basis 230 der Einstelleinheit 200 übereinstimmen.

Die Befestigung der Einstelleinheit 200 an der Glaseinheit 100 erfolgt über eine Klemmschiebeverbindung, wie sie im Detail in der EP 0 609 508 B1 beschrieben ist. Insofern wird auf die EP 0 609 508 B1 Bezug genommen. Insbesondere ist die Klemmschiebeverbindung aus den Klemmgegenlagern 126-i, 128-i der Spiegeltrageplatte 120 und den in sie eingreifenden und komplementär ausgebildeten Haltezapfen 212-j, 214-j der Plattform 210 gebildet, wobei in montiertem Zustand die Haltezapfen 212-j in die Klemmgegenlager 126-i und die Haltezapfen 214-j in die Klemmgegenlager 128-i eingreifen.

Insbesondere werden bei der Montage der Spiegeltrageplatte 120 an der Einstelleinheit 200 die Haltezapfen 212-j, 214-j in Montagerichtung A in die Abstände 132 eingesetzt und dann in Einschieberichtung B in die Spalte 130 geschoben und eingeklemmt (vgl. Fig. 2), wie dies in den Fign. 2 (Ausgangsposition) und 3 (Endposition) dargestellt ist, wobei jeder der Abstände 132 etwas länger als der entsprechende Haltezapfen 212-j, 214-j ist. Anschließend wird das Gehäuse 300 auf die Spiegeltrageplatte 120 aufgesetzt, wobei (a) sich die Stege 134 in entsprechende Abstände 132 schieben, so dass ein Lösen der Einstelleinheit 200 entgegen der Pfeilrichtung B blockiert ist, (b) die Umfangsränder des Gehäuses 300 und der Spiegeltrageplatte 200 nach Art einer Klippverbindung überlappend ineinander greifen, wie es in Fig. 4 im Schnitt dargestellt ist, und (c) die Nasen 310 der Rasthaken 308 des Gehäuses 300 in entsprechende Öffnungen 136 in den Stegen 134 der Spiegeltrageplatte 120 einrasten.

In montiertem Zustand ragt die Basis 230 der Einstelleinheit 200 durch die zentrale Öffnung 302 des Gehäuses 300 nach außen hervor. Zur Trennung von Spiegeltrageplatte 120 und Gehäuse 300 weist letzteres Öffnungen 312 auf (vgl. Fig. 5), durch die mit Hilfe eines schlanken Werkzeugs **W,** z. B. eines Schraubendrehers, gegen die Nase 134 **oder an den Rasthaken 308** gedrückt und somit die Verrastung des Rasthakens 308 aufgehoben werden kann. Anschließend wird die aus der Spiegeleinheit 100, der Einstelleinheit 200 und dem Gehäuse 300 bestehende Baugruppe unter Zwischenfügung des Winkeladapters 402 an dem Träger 404 mittels einer Schraubverbindung befestigt.

Der Winkeladapter 402 dient dazu, die unterschiedlichen Blickwinkel des Fahrers auf den fahrerseitigen Rückspiegel einerseits und den beifahrerseitigen Rückspiegel andererseits auszugleichen.

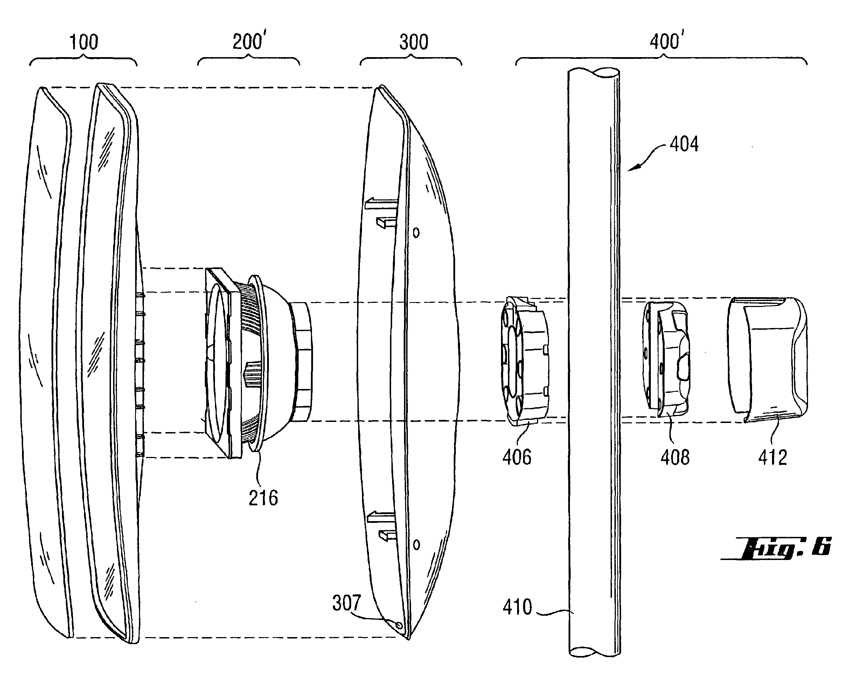

Fig. 6 zeigt eine zweite Ausführungsform der vorliegenden Erfindung. Die zweite Ausführungsform unterscheidet sich von der ersten Ausführungsform dadurch, dass die elektrische Einstelleinheit 200 der ersten Ausführungsform durch eine manuelle Einstelleinheit 200' und die Befestigungseinheit 400 der ersten Ausführungsform durch eine Befestigungseinheit 400' ersetzt ist. Die Basis 230 der Einstelleinheit 200' ist nicht mit dem Winkeladapter 402 sondern mit einem ersten Adapterteil 406 eines Montageadapters 406, 408 verbunden ist. Das erste Adapterteil 406 und ein zweites Adapterteil 408 sind auf gegenüberliegenden Seiten eines Trägerrohrs 410 der Haltevorrichtung 404 angeordnet und an diesem z. B. durch eine Schraubverbindung befestigt. Das zweite Adapterteil 408 ist ferner mit einer Schutzkappe 412 abgedeckt.

Beiden Ausführungsformen gemeinsam ist, dass die Größe der zentralen Öffnung 302 und der Abstand der Einstelleinheit 200 von dem Gehäuse 300 so gewählt sind, dass es über den Winkelverstellbereich der Einstelleinheit 200 nicht zur Kollision zwischen dem Gehäuse 300 und der Einstelleinheit 200 kommt. Hierdurch verbleibt konstruktionsbedingt ein kleiner Spalt zwischen der Basis 230 und der Einstelleinheit 200. Da durch diesen Spalt Wasser in das Innere der Gehäuse 300 gelangen kann, ist an der Einstelleinheit 200, **200'** eine Abtropfkante 216 vorgesehen. An dieser Abtropfkante 216 sammelt sich das eindringende Wasser und kann nach unten abtropfen. Durch eine kleine Ablauföffnung **307** in dem Gehäuse 300 am in montiertem Zustand unteren Ende der Rückspiegelanordnung kann das Wasser aus dem Gehäuse 300 austreten.

Alternativ kann der Spalt zwischen Einstelleinheit 200, **200'** und Gehäuse 300 auch durch eine Gummidichtung - nicht dargestellt - abgedichtet werden. Eine Ablauföffnung **307** etc. erübrigt sich dann.

### Bezugszeichenliste:

- **100**: **Glaseinheit**
- 110: Spiegelscheibe
- 120: Spiegeltrageplatte
- 122: Vorderseite von 120
- 124: Rückseite von 120
- 126-i: Klemmgegenlager (linke Reihe)
- 128-i: Klemmgegenlager (rechte Reihe)
- 130: Spalte
- 132: Abstände
- 134: Stege an 124
- 136: Öffnungen in 134

- **200 (')**: **Einstelleinheit**
- 210: Plattform
- 212-j: Haltezapfen (rechte Reihe; zu 126-i)
- 214-j: Haltezapfen (linke Reihe; zu 128-i)
- 216: Abtropfkante
- 218: Kalotte (plattformseitig)
- 220: Kalotte (basisseitig)
- 230: Basis
- 232: Gewindebohrungen in 230

- **300**: **Gehäuse**
- 302: Zentrale Öffnung
- 304: Sicherungsstege
- 306: Fortsätze an 304
- 307: **Ablauföffnung in 300**
- 308: Rasthaken
- 310: Nase an 308
- 312: Öffnungen **für Werkzeug W** (Fig. 4)

- **400(')**: **Befestigungseinheit**
- 402: Winkeladapter
- 403: Durchgangslöcher
- 404: Haltevorrichtung
- 405: Durchgangslöcher
- 406: Erstes Adapterteil
- 408: Zweites Adapterteil
- 410: Trägerrohr
- 412: Schutzkappe

- A: Montagerichtung
- B: Einschieberichtung
- W: Werkzeug

- α: Winkel (Fig. 5)
- β: Winkel (Fig. 5)

## Patentansprüche

1. Rückspiegelanordnung für Fahrzeuge, mit:
einer Einstelleinheit (200), die eine Basis (230) umfasst, die mittels einer Befestigungseinheit (400) an dem Fahrzeug befestigbar ist, und die eine Plattform (210) umfasst, die gegenüber der Basis (230) um wenigstens eine Achse schwenkbar ist;
einer Spiegeltrageplatte (120) mit einer Vorder- und einer Rückseite (122, 124), wobei die Spiegeltrageplatte (120) mit der Rückseite (124) an der Plattform (210) befestigt ist;
einer Spiegelscheibe (110), die auf der Rückseite (122) der Spiegeltrageplatte (120) befestigt ist;
und
einem Gehäuse (300), das eine Öffnung (302) aufweist, durch die die Basis (230) nach außen ragt;
**dadurch gekennzeichnet,**
**dass** das Gehäuse (300) an der Spiegeltrageplatte (120) befestigt ist.

2. Rückspiegelanordnung nach Anspruch 1, **dadurch gekennzeichnet, dass** das Gehäuse (300) ausschließlich an der Spiegeltrageplatte (120) befestigt ist.

3. Rückspiegelanordnung für Fahrzeuge nach Anspruch 1 oder 2, **dadurch gekennzeichnet,**
**dass** die Spiegeltrageplatte (120) mittels einer Formschluss- und/oder einer Reibschluss-Verbindung an der Plattform (210) befestigt ist,
**dass** das Gehäuse (300) Sicherungsmittel (304) umfasst, die die Formschluss- und/oder einer Reibschluss-Verbindung zwischen der Plattform (210) und der Spiegeltrageplatte (120) sichern, wenn das Gehäuse (300) mit der Spiegeltrageplatte (120) verbunden ist.

4. Rückspiegelanordnung für Fahrzeuge nach Anspruch 3, **dadurch gekennzeichnet, dass** die Spiegeltrageplatte (120) mittels einer Klemmschiebeverbindung mit der Plattform (210) verbunden ist, und dass die Klemmschiebeverbindung eine Einschieberichtung (B) aufweist, die im Wesentlichen parallel zu der Glaseinheit (100) verläuft.

5. Rückspiegelanordnung für Fahrzeuge nach Anspruch 4, **dadurch gekennzeichnet, dass** die Montagerichtung (A) des Gehäuses (300) an der Spiegeltrageplatte (120) im Wesentlichen senkrecht zu der Einschieberichtung (B) der Klemmschiebeverbindung zwischen Spiegeltrageplatte (120) und Plattform (210) verläuft.

6. Rückspiegelanordnung für Fahrzeuge nach einem der vorhergehenden Ansprüche 3 bis 5, **dadurch gekennzeichnet, dass** das Sicherungsmittel (304) als mindestens ein Sicherungssteg (304) ausgebildet ist, der die Lösebewegung der Spiegeltrageplatte (120) gegenüber der Plattform (210) blockiert.

7. Rückspiegelanordnung für Fahrzeuge nach einem der vorhergehenden Ansprüche, **dadurch gekennzeichnet, dass** das Gehäuse (300) mittels einer Clip-Verbindung an der Spiegeltrageplatte (120) befestigt ist.

8. Rückspiegelanordnung für Fahrzeuge nach einem der vorhergehenden Ansprüche, **dadurch gekennzeichnet, dass** die Einstelleinheit (200) eine motorische Einstelleinheit (200) ist.

9. Rückspiegelanordnung für Fahrzeuge nach einem der vorhergehenden Ansprüche, **dadurch gekennzeichnet, dass** die Basis (230) mit einem Montageadapter (406, 408) zur Montage der Rückspiegelanordnung an der Befestigungseinheit (400) verbunden ist.

10. Rückspiegelanordnung für Fahrzeuge nach einem der vorhergehenden Ansprüche, **dadurch gekennzeichnet, dass** die Basis (230) mit einem Winkeladapter (402) zur Voreinstellung einer bestimmten Winkellage zwischen Fahrzeug und Spiegelanordnung verbunden ist.

11. Rückspiegelanordnung für Fahrzeuge nach einem der vorhergehenden Ansprüche, **dadurch gekennzeichnet, dass** die Einstelleinheit (200) eine Abtropfkante (218) und das Gehäuse (300) eine Ablaufbohrung (307) aufweist.

12. Rückspiegelanordnung für Fahrzeuge nach einem der vorhergehenden Ansprüche, **dadurch gekennzeichnet, dass** die Öffnung (302) eine zentrale Öffnung (302) ist, die kreisförmig ausgebildet ist und einen ringförmig immer gleichen Spalt zur Außenfläche der Einstelleinheit (200) besitzt, unabhängig von der Winkelstellung zwischen der Plattform (210) und der Basis (230).

## Claims

1. Rear view mirror arrangement for vehicles, comprising:
an adjusting unit (200) comprising a base (230) that can be attached to the vehicle by means of an attachment unit (400), and comprising a platform (210) that can be pivoted relative to the base (230) about at least one axis;
a mirror support plate (120) with a front and a rear side (122, 124), the rear side (124) of the mirror support plate (120) being secured to the platform (210);
a mirror plate (110) attached to the rear side (122) of the mirror support plate (120); and
a housing (300) which has an opening (302) through which the base (230) projects outwardly,
**characterised in that**
the housing (300) is attached to the mirror support plate (120).

2. Rear view mirror arrangement according to claim 1, **characterised in that** the housing (300) is attached only onto the mirror support plate (12).

3. Rear view mirror arrangement for vehicles according to claim 1 or 2, **characterised in that** the mirror support plate (120) is secured by means of a form fit and/or frictional connection to the platform (21),
**in that** the housing (300) comprises securing means (304) which secure the form fit and/or frictional connection between the platform (210) and the mirror support plate (120), when the housing (300) is connected to the mirror support plate (120).

4. Rear view mirror arrangement for vehicles according to claim 3, **characterised in that** the mirror support plate (120) is connected by means of a clamping-sliding connection to the platform (210), and **in that** the clamping sliding connection has an insertion direction (B) which runs essentially parallel to the glass unit (100).

5. Rear view mirror arrangement for vehicles according to claim 4, **characterised in that** the assembly direction (A) of the housing (300) on the mirror support plate (120) runs essentially perpendicular to the insertion direction (B) of the clamping-sliding connection between the mirror support plate (120) and platform (210).

6. Rear view mirror arrangement for vehicles according to one of the preceding claims 3 to 5, **characterised in that** the securing means (304) is designed as at least one securing web (304) which blocks the release movement of the mirror support plate (120) relative to the platform (210).

7. Rear view mirror arrangement for vehicles according to one of the preceding claims, **characterised in that** the housing (300) is secured by means of a clip connection to the mirror support plate (120).

8. Rear view mirror arrangement for vehicles according to one of the preceding claims, **characterised in that** the adjusting unit (200) is a motor adjusting unit (200).

9. Rear view mirror arrangement for vehicles according to one of the preceding claims, **characterised in that** the base (230) is connected to an assembly adapter (406, 408) for mounting the rear view mirror arrangement on the securing unit (400).

10. Rear view mirror arrangement for vehicles according to one of the preceding claims, **characterised in that** the base (230) is connected to an angle adapter (402) for preadjusting a specific angular position between the vehicle and mirror arrangement.

11. Rear view mirror arrangement for vehicles according to one of the preceding claims, **characterised in that** the adjusting unit (200) comprises a drip edge (218) and the housing (300) comprises a drainage bore (307).

12. Rear view mirror arrangement for vehicles according to one of the preceding claims, **characterised in that** the opening (302) is a central opening (302), which is designed to be circular and has an annular, uniform gap to the outer surface of the adjusting unit (200), independently of the angular position between the platform (210) and the base (230).

## Revendications

1. Système de rétroviseur pour véhicules, comportant :
- une unité de réglage (200) comprenant une base (230), pouvant être fixée au véhicule au moyen d'une unité de fixation (400), et comprenant une plate-forme (210) apte à pivoter par rapport à la base (230) autour d'au moins un axe ;
- une plaque de support du miroir (120) avec une face avant et une face arrière (122, 124), ladite plaque de support du miroir (120) étant fixée par la face arrière (124) sur la plate-forme (210) ;
- un miroir (110) qui est fixé sur la face arrière (122) de la plaque de support du miroir (120) ; et
- un boîtier (300) muni d'un orifice (302), à travers lequel la base (230) s'avance vers l'extérieur ;
**caractérisé en ce que**
le boîtier (300) est fixé sur la plaque de support du miroir (120).

2. Système de rétroviseur selon la revendication 1, **caractérisé en ce que** le boîtier (300) est fixé uniquement sur la plaque de support du miroir (120).

3. Système de rétroviseur pour véhicules selon la revendication 1 ou 2, **caractérisé en ce que** la plaque de support du miroir (120) est fixée à la plate-forme (210) au moyen d'un assemblage par conjugaison de forme et/ou d'un assemblage par force, **en ce que** le boîtier (300) comprend des moyens de sécurité (304) qui sécurisent l'assemblage par conjugaison de forme et/ou l'assemblage par force entre la plate-forme (210) et la plaque de support du miroir (120) lorsque le boîtier (300) est relié à la plaque de support du miroir (120).

4. Système de rétroviseur pour véhicules selon la revendication 3, **caractérisé en ce que** la plaque de support du miroir (120) est reliée à la plate-forme (210) au moyen d'un assemblage bloqué par coulissement, et **en ce que** ledit assemblage bloqué par coulissement comporte une direction d'introduction (B) sensiblement parallèle à l'unité de miroir (100).

5. Système de rétroviseur pour véhicules selon la revendication 4, **caractérisé en ce que** la direction de montage (A) du boîtier (300) sur la plaque de support du miroir (120) est sensiblement perpendiculaire à la direction d'introduction (B) de l'assemblage bloqué par coulissement entre la plaque de support du miroir (120) et la plate-forme (210).

6. Système de rétroviseur pour véhicules selon l'une quelconque des revendications précédentes 3 à 5, **caractérisé en ce que** le moyen de sécurité (304) est réalisé sous la forme d'au moins un téton de sécurité (304) qui bloque le mouvement de désolidarisation de la plaque de support du miroir (120) par rapport à la plate-forme (210).

7. Système de rétroviseur pour véhicules selon l'une quelconque des revendications précédentes, **caractérisé en ce que** le boîtier (300) est fixé à la plaque de support du miroir (120) au moyen d'un assemblage à clips.

8. Système de rétroviseur pour véhicules selon l'une quelconque des revendications précédentes, **caractérisé en ce que** l'unité de réglage (200) est une unité de réglage (200) à moteur.

9. Système de rétroviseur pour véhicules selon l'une quelconque des revendications précédentes, **caractérisé en ce que** la base (230) est reliée à un adaptateur d'assemblage (406, 408) pour le montage du système de rétroviseur sur l'unité de fixation (400).

10. Système de rétroviseur pour véhicules selon l'une quelconque des revendications précédentes, **caractérisé en ce que** la base (230) est reliée à un adaptateur angulaire (402) pour le préréglage d'une position angulaire déterminée entre le véhicule et le système de rétroviseur.

11. Système de rétroviseur pour véhicules selon l'une quelconque des revendications précédentes, **caractérisé en ce que** l'unité de réglage (200) comporte un rejetteau (218) et le boîtier (300) comporte une forure d'évacuation (307).

12. Système de rétroviseur pour véhicules selon l'une quelconque des revendications précédentes, **caractérisé en ce que** l'orifice (302) est un orifice (302) central circulaire et possède une fente annulaire toujours identique vers la face extérieure de l'unité de réglage (200), indépendamment de la position angulaire entre la plate-forme (210) et la base (230).
